# EUROPEAN PATENT SPECIFICATION

(11) **EP 1 936 518 B1**
(45) Date of publication and mention of the grant of the patent: **22.06.2011**
(21) Application number: 06797092.1
(22) Date of filing: 30.08.2006
(51) Int. Cl.: G06F 17/30

(54) **DISPLAY DEVICE, OUTPUT DEVICE, DISPLAY SYSTEM, DISPLAY METHOD, MEDIUM, PROGRAM, AND EXTERNAL UNIT**
DISPLAY-EINRICHTUNG, AUSGABEEINRICHTUNG, DISPLAY-SYSTEM, DISPLAY-VERFAHREN, MEDIUM, PROGRAMM UND EXTERNE EINHEIT
DISPOSITIF D AFFICHAGE, DISPOSITIF DE SORTIE, SYSTÈME D AFFICHAGE, PROCÉDÉ D AFFICHAGE, SUPPORT, PROGRAMME ET UNITÉ EXTERNE

(30) Priority: 07.09.2005 JP 2005259725
(43) Date of publication of application: 25.06.2008
(73) Proprietor: International Business Machines Corporation, Armonk, NY 10504 (US)
(72) Inventor: USUBA, Yasuo c/o IBM United Kingdom Limited, Hursley Park Winchester Hampshire SO21 2JN (GB); KAMIJO, Noboru c/o Tokyo Research Laboratory, Yamato-shi, Kanagawa 242-8502 (JP); KAMIJOH, Kohichi c/o Tokyo Research Laboratory, Yamato-shi, Kanagawa 242-8502 (JP); OCHIAI, Kazumasa c/o Hakozaki site, Chuo-ku Tokyo 103-8510 (JP)
(74) Representative: Pyecroft, Justine Nicola C.
(86) International application number: PCT/JP2006/317120
(87) International publication number: WO 2007/029582

(56) References cited:
- WO-A-2005/017812
- JP-A- 2002 082 963
- JP-A- 2002 366 566
- JP-A- 2005 031 916
- JP-A- 2005 167 330
- JP-A- 2005 215 178
- US-A1- 2003 097 441
- MICHAEL ROHS ED - HITOMI MURAKAMI ET AL: "Real-World Interaction with Camera Phones" UBIQUITOUS COMPUTING SYSTEMS; [LECTURE NOTES IN COMPUTER SCIENCE;;LNCS], SPRINGER-VERLAG, BERLIN/HEIDELBERG, vol. 3598, 24 August 2005 (2005-08-24), pages 74-89, XP019012923 ISBN: 978-3-540-27893-1

## Description

### Field of the Invention

The present invention relates to a display apparatus, an output device, a display system, a display method, a medium, a program product, and an external unit. The present invention relates particularly to a display apparatus that scans an image pattern to display an outputted image according to the image pattern thus scanned, a display system, a display method, a medium a program product, and an external unit.

### Background Art

A code image, such as QR code (ISO/IEC18004), has conventionally been used (for example, refer to Non-patent Document 1.). The code image is used to acquire an address (URL) into a cell phone or the like in accessing, for example, the Internet. When accessing an address on the Internet, which is displayed using the code image, the personal digital assistant captures an image of the code image with a built-in camera, and decodes the captured image. The personal digital assistant then accesses the address on the Internet, which is designated with a code obtained by the decoding, to display a screen of an Internet site. Making use of the code image like this makes it possible to eliminate the time and effort of entering the address with keys. For that reason, the code image is suitable to be used for displaying an advertisement for the user's personal digital assistant.

Meanwhile, as a reference technique, there is proposed such a camera that, music data recorded upon shooting an image is overlapped with the image obtained by that shooting, and printed with a special ink that is not normally visible (for example, refer to Patent Document 1.).
[Patent Document 1]
   Japanese Unexamined Patent Publication (Kokai) No. 2000-32306
[Non-patent Document 1]
   Feature of QR code, homepage URL
"http://www.densowave.com/qrcode/qrfeature.html", searched on August 11, 2005 US Patent Application Publication 2003/0097441 discloses systems and methods that allow users to easily control information delivery procedures through an intuitive process using physical entities for selecting profiles and synthesizing filters.

### Disclosure of the Invention

### Problems to be solved by the Invention

In a conventional art, when image information designated by a code image is displayed, it is general that a display image is uniquely determined according to the code image to be scanned. As a result, an unsuitable image may be displayed depending on a user's situation. Therefore, the object of the present invention is to provide a display apparatus, an output device, a display system, a display method, a medium, a program product, and an external unit, which can solve the aforementioned problems. The object will be achieved by combinations of features set forth in independent claims in the scope of claims. In addition, dependent claims define more advantageous, specific examples of the present invention.

### Means for Solving the Problems

In order to solve the aforementioned problems, according to a first aspect of the present invention, there is provided a display apparatus comprising: a scanning unit for scanning an image pattern on a physical medium; an acquisition unit for acquiring at least one status parameter of an external environment acquired by an environmental sensor; a decision unit for determining a display object to be presented to a user based on the image pattern scanned by the scanning unit according to the status parameter acquired by the acquisition unit; a shooting unit for shooting the physical medium to generate a captured image, and a display unit for displaying the display object determined by the decision unit and the captured image in an overlapping relationship.

Moreover, according to an embodiment of the present invention, there is provided an output device including a scanning unit for scanning information, an acquisition unit for acquiring at least one status parameter indicative of a status of an external environment, a generating unit for generating output data according to the information scanned by the scanning unit and the status parameter acquired by the acquisition unit, and an output unit for outputting the output data generated by the generating unit to a user.

Moreover, according to another embodiment of the present invention, there is provided a medium with an image pattern including a code indicative of information to be presented to a user attached thereto, wherein the code includes information for designating a type of a status parameter of an external environment to be acquired by an apparatus operable to present the information indicated by the code to the user, and wherein the medium permits the apparatus, which has scanned the image pattern, to acquire the type of the status parameter of the external environment and to display the display object according to the status parameter.

Moreover, according to another embodiment of the present invention, there is provided an external unit to be attached to an information processing apparatus including an acquisition unit for acquiring at least one status parameter of an external environment acquired by an environmental sensor, and a program memory operable to store a program product for causing the information processing apparatus to operate as a display apparatus, wherein the program memory stores a program product for causing the information processing apparatus, to which the external unit is being attached, to operate as a scanning unit for scanning an image pattern on a physical medium, an acquisition unit for acquiring at least one status parameter of an external environment acquired by an environmental sensor, a decision unit for determining a display object to be presented to a user based on the image pattern scanned by the scanning unit according to the status parameter acquired by the acquisition unit, and the display unit for displaying the display object thus determined by the decision unit.

According to a second aspect of the present invention, there is provided a display method, comprising the steps of: scanning an image pattern on a physical medium; acquiring at least one status parameter of an external environment acquired by an environmental sensor; determining a display object to be presented to a user based on the scanned image pattern according to the acquired status parameter; shooting the physical medium to generate a captured image; and, displaying the display object thus determined and the captured image in an overlapping relationship.

According to a third aspect of the present invention, there is provided a program product for causing an information processing apparatus to operate as a display apparatus, the program product causing the information processing apparatus to operate as: a scanning unit for scanning an image pattern on a physical medium; an acquisition unit for acquiring at least one status parameter of an external environment acquired by an environmental sensor; a decision unit for determining a display object to be presented to a user based on the image pattern scanned by the scanning unit according to the status parameter acquired by the acquisition unit; a shooting unit for shooting the physical medium to generate a captured image; and a display unit for displaying the display object determined by the decision unit and the captured image in an overlapping relationship.

Note herein that, the aforementioned summary of the invention does not enumerate all of the necessary features of the present invention, and sub-combinations of these features may be the inventions.

### Advantages of the Invention

According to the present invention, the most suitable image according to the environment can be displayed to the user.

### Brief Description of the drawings

Fig. 1 illustrates an entire configuration of a display system 1 in accordance with an embodiment of the present invention;
Fig. 2 illustrates a code image 10 represented with a QR code;
Fig. 3 illustrates a configuration of a display apparatus 30 in accordance with the present embodiment;
Fig. 4 illustrates a flow chart of the process of the display apparatus 30;
Fig. 5 illustrates a block diagram of an information processing apparatus 40 serving as the display apparatus 30;
Fig. 6 illustrates the display unit 36 in the situation before displaying an advertisement when the display system 1 in accordance with the present embodiment is applied to the advertisement system;
Fig. 7 illustrates the display unit 36 in the situation after displaying the advertisement when the display system 1 in accordance with the present embodiment is applied to the advertisement system;
Fig. 8 illustrates a virtual insect collecting system 70 in accordance with the present embodiment;
Fig. 9 illustrates a book 80 as a modification of the virtual insect collecting system 70;
Fig. 10 illustrates the book 80 as the modification of the virtual insect collecting system 70, and the display apparatus 30 held up to the book 80;
Fig. 11 illustrates an appearance of a display apparatus 90 in accordance with the modification of the present embodiment; and
Fig. 12 illustrates a block diagram of the display apparatus 90 in accordance with the modification of the present embodiment.

### Description of Symbols

- 1:: Display system
- 10:: Code image
- 20:: Physical medium
- 30:: Display apparatus
- 31:: Shooting unit
- 32:: Scanning unit
- 33:: Acquisition unit
- 34:: Decision unit
- 35:: Database
- 36:: Display unit
- 37:: Environmental sensor
- 38:: Timer unit
- 39:: GPS unit
- 40:: Information processing apparatus
- 41:: Camera unit
- 42:: Sensor
- 43:: Processor
- 44:: Monitor
- 45:: Key
- 46:: Communication unit
- 47:: Memory unit
- 52:: Lens
- 54:: Filter
- 56:: Image sensor
- 58:: Irradiation unit
- 60:: Pointer
- 61:: Explanation character string
- 70:: Virtual insect collecting system
- 72:: Structure
- 80:: Book
- 90:: Display apparatus
- 92:: Main body
- 94:: External unit
- 96:: Slot
- 98:: Program memory

### Best Mode for Carrying out the Invention

Hereinafter, the present invention will be described through embodiments of the invention, but the following embodiments do not limit the invention according to the claims, and any combinations of features described in the embodiments are not essential in order to solve problems of the invention.

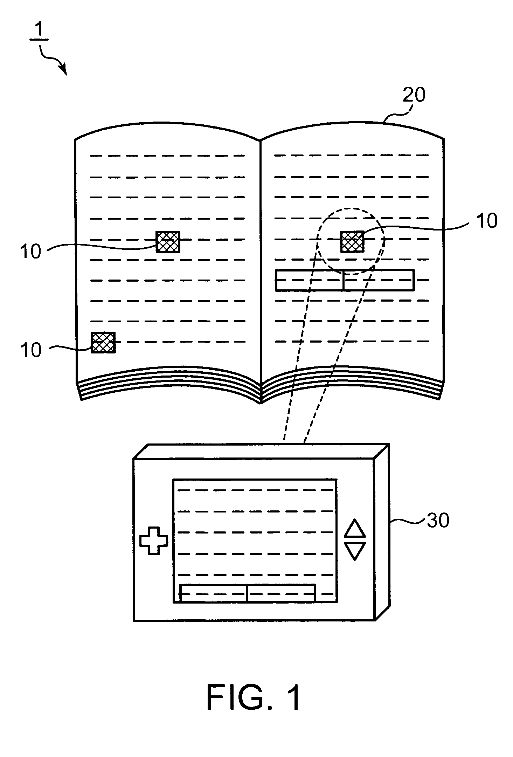

Fig. 1 illustrates an entire configuration of a display system 1. The display system 1 includes a physical medium 20 on which a code image 10 is attached, and a display apparatus 30.

The physical medium 20 is a magazine in the present embodiment, or alternatively, it may be goods having a surface on which the code image 10 can be attached, for example, a newspaper, an electric appliance, a wall, or the like. The code image 10 is attached on the surface of the physical medium 20 by printing or the like, and is an image including a code indicative of the information to be supplied to a user. The code image 10 may be an image that the user cannot visually recognize in the state of being attached onto the physical medium 20. For example, the code image 10 is printed with a special ink, which does not display the image under a normal light, but displays a light image under a predetermined light, such as infrared light or ultraviolet light, and is not visible with human being's eyes, but may be shot by irradiating an auxiliary light, such as infrared light or ultraviolet light. Such the code image 10 is an example of an image pattern in accordance with the present invention.

The display apparatus 30 scans the code image 10 and displays a display object according to contents thus scanned.

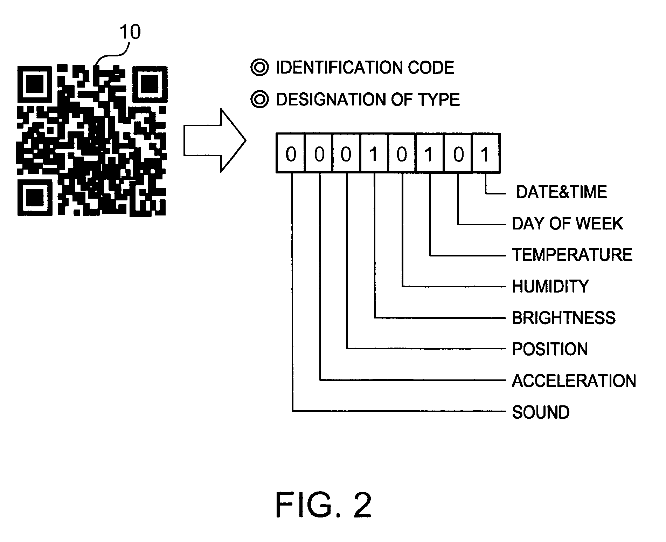

Fig. 2 shows an example of the code image 10 in which information showing the information to be supplied to the user is indicated with a QR code.

The code image 10 includes an identification code for designating a storage location of an image to be displayed to the user, a type of the image, or the like. Additionally, the code image 10 may include attribution information for designating a type of a status parameter of an external environment to be acquired by the display apparatus 30 that has scanned the code image 10.

Here, the status parameter of the external environment is information indicative of a status of the external environment of the display apparatus 30, and specifically, it is information, such as a time in acquisition, a date in acquisition, a day of the week in acquisition, a latitude and a longitude of the display apparatus, a brightness around the display apparatus, a temperature outside the display apparatus, a humidity outside the display apparatus, an acceleration applied to the display apparatus, a sound around the display apparatus, an orientation of the display apparatus, an atmospheric pressure around the display apparatus, or the like. The attribution information includes information for designating at least one of these status parameters. An originator of the code image 10 can arbitrarily designate any combinations of the status parameters to be acquired by the display apparatus 30 with the code image 10. Note herein that, the code image 10 is not limited to the QR code, but may be a bar code or the other two-dimensional code.

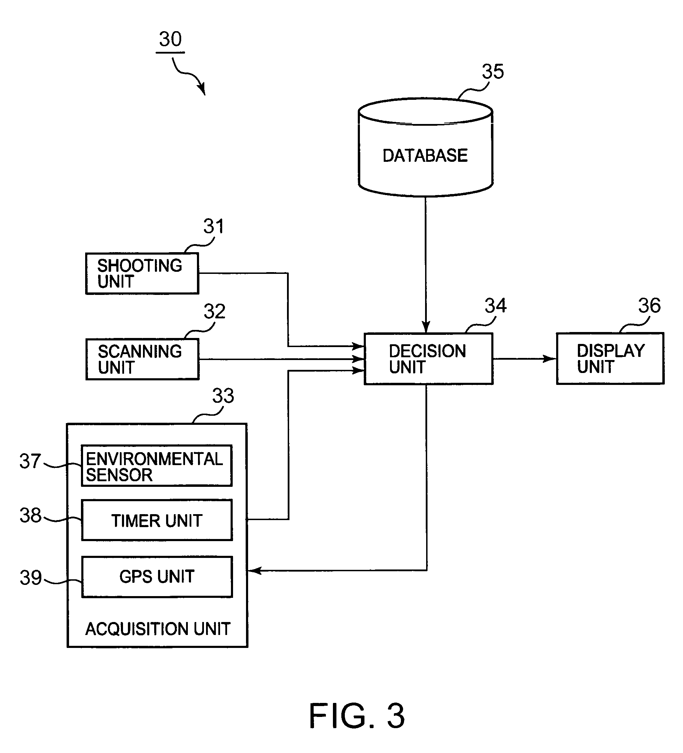

Fig. 3 shows a configuration of the display apparatus 30. The display apparatus 30 includes a shooting unit 31, a scanning unit 32, an acquisition unit 33, a decision unit 34, a database 35, and a display unit 36.

The shooting unit 31 shoots an object to be shot and generates a captured image. The shooting unit 31 supplies the captured image to the decision unit 34. The scanning unit 32 scans the code image 10. The scanning unit 32 supplies the code image 10 thus scanned to the decision unit 34.

The acquisition unit 33 acquires one or a plurality of status parameters designated by the decision unit 34 and supplies the acquired status parameter to the decision unit 34. The acquisition unit 33 includes an environmental sensor 37, a timer unit 38, and a GPS unit 39, for example. The acquisition unit 33 acquires output values from the environmental sensor 37, the timer unit 38, and the GPS unit 39. The environmental sensor 37 measures, for example, the brightness around the display apparatus 30, the external temperature, the external humidity, the acceleration, the sound, the orientation, the atmospheric pressure, the smell, or the like. The timer unit 38 outputs the time, the date, and the day of the week. The GPS unit 39 outputs the latitude and the longitude of the display apparatus 30.

The decision unit 34 determines the display object to be presented to the user based on the code image 10 supplied from the scanning unit 32, according to the status parameter acquired by the acquisition unit 33. The database 35 manages data serving as a base of the display object generated by the decision unit 34. The display unit 36 displays the display object generated by the decision unit 34.

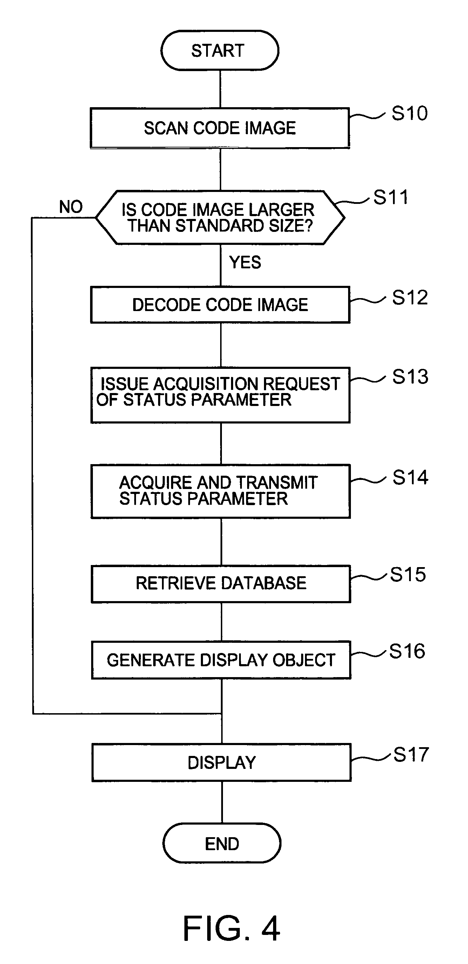

Fig. 4 shows a flow chart of the process of the display apparatus 30.

First, the display apparatus 30 scans the code image 10 according to a user's operation (Step S10). Subsequently, the decision unit 34 determines whether or not the scanned code image 10 is larger than a standard size (Step S11). If the scanned code image 10 is larger than the standard size, the decision unit 34 proceeds to Step S12, and if not, it proceeds to Step S 17. The decision unit 34 decodes the code image 10 scanned by the scanning unit 32, and recognizes the identification code and the attribution information included in the code image 10 (Step S12). Subsequently, the decision unit 34 issues an acquisition request of one or a plurality of status parameters designated by the attribution information, to the acquisition unit 33 (Step S13). Subsequently, the acquisition unit 33 acquires the status parameter in response to the request from the decision unit 34, and transmits the acquired status parameter to the decision unit 34 (Step S14).

Subsequently, the decision unit 34 extracts the identification code included in the code image 10 and the image information specified by the acquired status parameter, by retrieving the database 35 (Step S 15). Subsequently, the decision unit 34 generates the display object based on the extracted image information (Step S16). For example, the decision unit 34 generates the display object, by treating and changing the image specified by the identification code, according to the acquired status parameter. Meanwhile, when a plurality of images are allocated to one identification code to be managed, the decision unit 34 selects any one image among the images currently allocated according to the status parameter, and generates the display object based on the selected image. Subsequently, the display unit 36 displays the display object generated by the decision unit 34 and the captured image generated by the shooting unit 31 to the user in such a manner that the former overlaps with the latter (Step S 17). Incidentally, if it is determined at Step S 11 that the code image 10 is smaller than the standard size, the captured image is displayed as it is (Step S 17).

According to this display system 1, the optimum image according to the external environment of the display apparatus 30 can be displayed to the user. Incidentally, the decision unit 34 may display the display object independently.

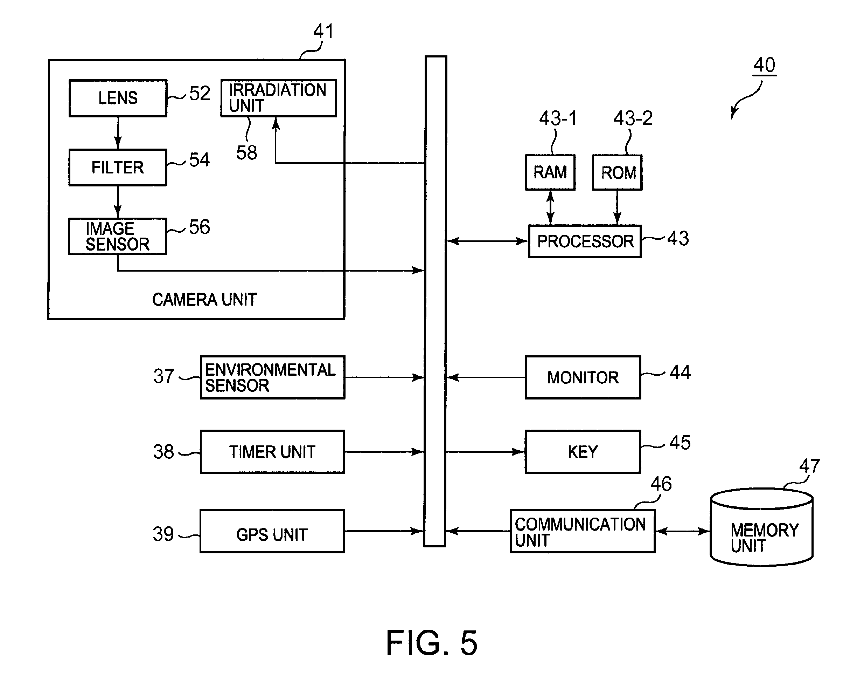

Fig. 5 shows a block diagram of an information processing apparatus 40 serving as the display apparatus 30. The information processing apparatus 40 includes a camera unit 41, a processor 43, a monitor 44, a key 45, a communication unit 46, a memory unit 47, the environmental sensor 37, the timer unit 38, and the GPS unit 39.

The camera unit 41 receives light from the image object to generate the captured image. Additionally, the camera unit 41 receives light from the code image 10 to generate the image data of the code image 10. For example, the camera unit 41 irradiates a fill light, such as ultraviolet light or infrared light, to the code image 10 that the user cannot visually recognize, and receives light emitted by the code image 10 resulting from the irradiation of the fill light to generate the image data. The camera unit 41 includes a lens 52 operable to converge light from the image object and the code image 10, a filter 54 allowing ultraviolet light or infrared light to pass through in the case of shooting the code image 10, an image sensor 56 operable to convert the light which has passed through the filter 54 into electric information, and an irradiation unit 58 operable to irradiate the fill light to the code image 10. This camera unit 41 implements functions of the shooting unit 31 and the scanning unit 32 of the display apparatus 30.

The processor 43 executes a program stored in a RAM 43-1, a ROM 43-2, or the like, and performs control for each unit of the information processing apparatus 40. The processor 43 operates the information processing apparatus 40 as the display apparatus 30 by controlling each unit. The monitor 44 displays the image to the user. The monitor 44 implements a function of the display unit 36 of the display apparatus 30. The key 45 receives an operation input from the user. The communication unit 46 communicates with an external server of the display apparatus 30 or other apparatuses via a network. The memory unit 47 stores the image data to be supplied to the user. The memory unit 47 may be provided inside the display apparatus 30, or may be connected therewith via the communication unit 46 while being provided on a network.

The environmental sensor 37 includes, as one example, a brightness sensor for measuring the brightness around the display apparatus 30, a temperature sensor for measuring the external temperature, a humidity sensor for measuring the external humidity, an acceleration sensor for measuring the acceleration, a sound volume sensor for measuring the sound volume, an orientation sensor for detecting the terrestrial magnetism to measure the orientation, an atmospheric pressure sensor for measuring the atmospheric pressure, a smell sensor for detecting the smell, or the like. The environmental sensor 37 outputs a measured external environment status in response to an acquisition request from the processor 43. The timer unit 38 outputs the current time, the date, and the day of the week in response to the acquisition request from the processor 43. The GPS unit 39 outputs latitude and longitude information at the current position in response to the acquisition request from the processor 43.

The program installed in such an information processing apparatus 40 is provided by the user via a recording medium or a network. The program is executed in the processor 43.

The program, which is installed in the information processing apparatus 40 and causes the information processing apparatus 40 to operate as the display apparatus 30, is provided with an image shooting module, a scanning module, an acquisition module, a generating module, a database module, and a display module. These program products or modules work with the processor 43 or the like, and causes the information processing apparatus 40 to operate as the shooting unit 31, the scanning unit 32, the acquisition unit 33, the decision unit 34, the database 35, and the display unit 36, respectively.

The program or modules shown above may be stored in an external storage medium. As the storage medium, other than a flexible disk and a CD-ROM, an optical recording medium such as DVD, CD, or the like, a magneto optic recording medium such as MO or the like, a tape medium, a semiconductor memory such as an IC card or the like may be used. Moreover, the memory apparatus such as a hard disk, a RAM, or the like, provided in a server system connected to a private telecommunication network or the Internet may be used as the recording medium to provide the program to the information processing apparatus 40 via the network.

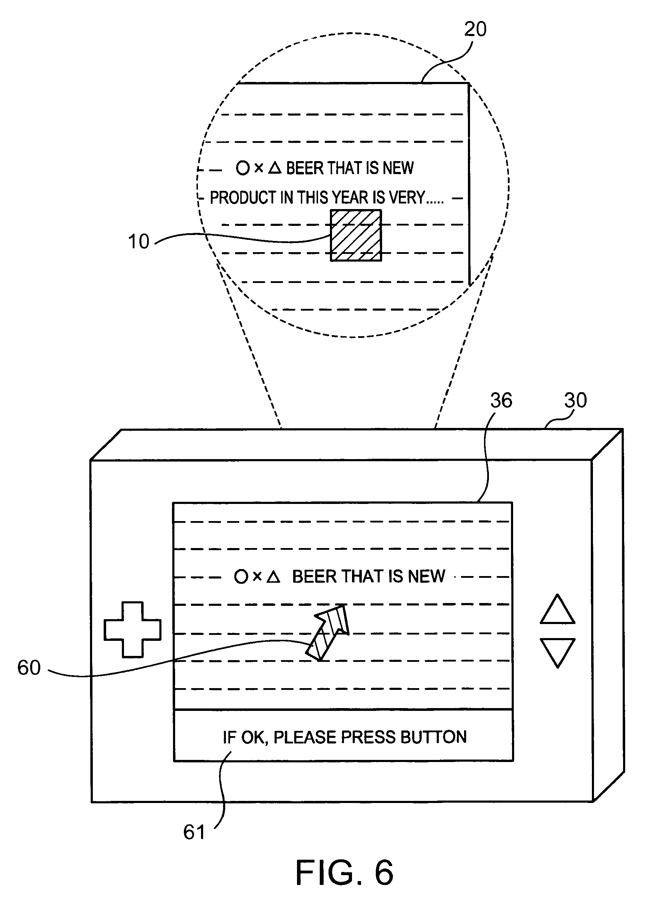

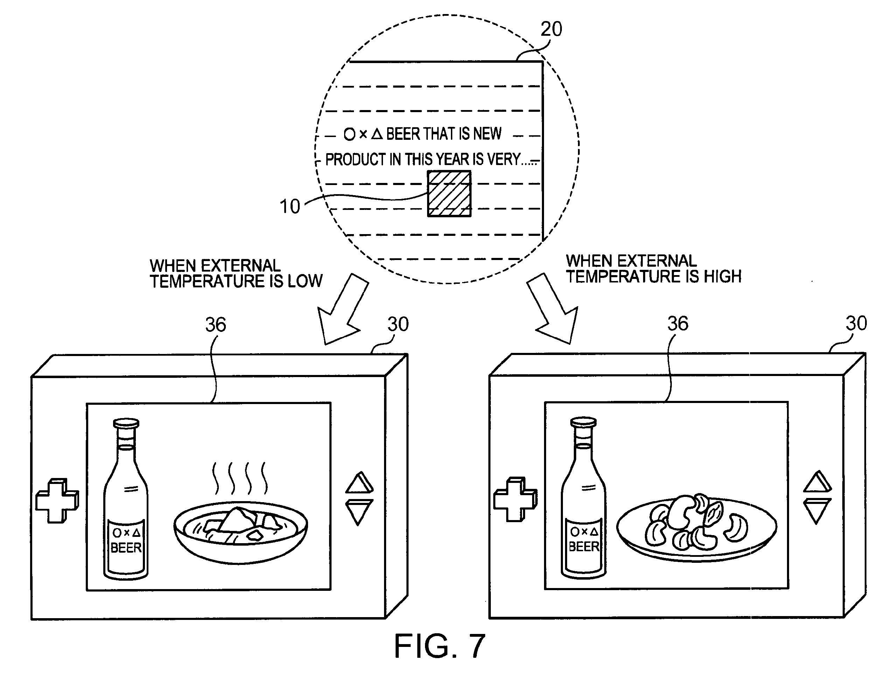

Figs. 6 and 7 show an advertisement system, which is one of application examples of the display system 1. Note herein that, in Figs. 6 and 7, the area surrounded by the dotted line represents a part of a magazine used as the physical medium 20 in this application example. More specifically, in the area surrounded by the dotted line, an article of a beer drink that is a new product is described, and the code image 10 for presenting an advertisement of the beer drink to the user, which is printed with a special ink that cannot be visually recognized by human being's eyes, is also described.

Fig. 6 shows the display unit 36 in the situation before displaying the advertisement. In the case where the magazine as the physical medium 20 is shot, the decision unit 34 of the display apparatus 30 allows the display unit 36 to display the content of the article on the display unit 36, and also a pointer 60 for indicating that advertisement information is present in a position on the display image where the code image 10 is attached. As a result, the display apparatus 30 can make the user recognize the presence of the code image 10. Moreover, when the size of the code image 10 to an angle of field is smaller than a reference size, the decision unit 34 may display the pointer 60 indicative of the presence of the advertisement information. This makes it possible to make the user recognize the presence of the code image 10 even when the content of the code cannot be recognized. Additionally, the decision unit 34 of the display apparatus 30 may display an explanation character string 61 for indicating an operating instruction when the user wants to sec the content of the advertisement, along with the pointer 60, on the display unit 36.

Fig. 7 shows the display unit 36 in the situation after displaying the advertisement. In the case where the operation for displaying the advertisement or the like is made by the user while the pointer 60 is being displayed, and so on, the decision unit 34 of the display apparatus 30 acquires a predetermined advertisement image designated by the code image 10 from the database 35 and allows the display unit 36 to display it. In this instance, the decision unit 34 acquires the status parameter and switches the advertisement image to be displayed according to the acquired status parameter. For example, if the advertisement of the beer drink is displayed, the decision unit 34 will acquire the external temperature as the status parameter. As one example, when the atmospheric temperature is high, the decision unit 34 may cause to display foodstuffs, which are delicious to eat in a hot season, with the beer drink, and the background of the beer drink may be set to an image of a summer sea or the like. Meanwhile, when the external temperature is low, the decision unit 34 may cause to display foodstuffs, which are delicious to eat in a cold season, with the beer drink, and the background of the beer drink may be set to an image of the north pole or the like.

By switching the advertisement image according to the status parameter like this, the display apparatus 30 can display the advertisement of the most suitable content to the user according to the external environment.

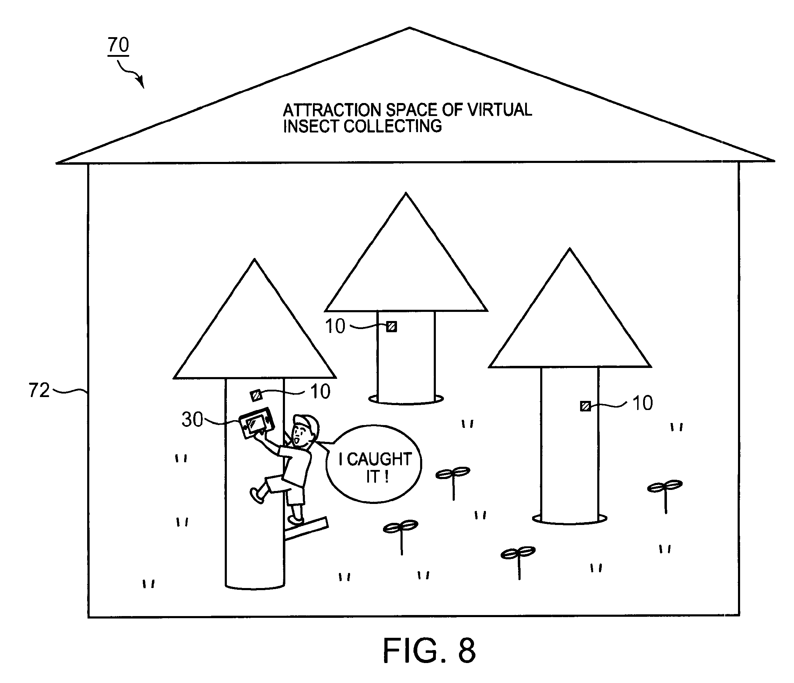

Fig. 8 shows a virtual insect collecting system 70 for providing the user with a pseudo animate thing collecting attraction, which is one of the application examples of the display system 1.

The virtual insect collecting system 70 is provided with a building 72 used as the physical medium 20, and the portable display apparatus 30.

The building 72 has therein an attraction space for forming such a pseudo situation that insects can be collected in a forest, a field of grass, or the like. Moreover, inside the building 72, the code image 10 including a code for identifying a type of the insects is attached at a large number of locations where the insects are likely to exist. The user has the display apparatus 30 in its hand, and looks for the insect, with holding up the display apparatus 30 to the location where the insect is likely to exist. While the user is looking for the insect, the display apparatus 30 shoots the environment while irradiating a fill light, such as infrared light. When the code image 10 attached to the attraction space is recognized, the display apparatus 30 will then display a pointer on the display unit 36, or will sound from a speaker to thereby notify the user that the insect has been discovered. When a predetermined capture operation is made by the user after discovering the insect, the display apparatus 30 downloads data regarding the discovered insect from, for example, the database 35 to register them into the internal memory, and displays the image of the insect or the like according to the user's operation after that. As a result, the display apparatus 30 can make the user experience of having caught the insect in pseudo.

Here, when the insect is discovered (when the code image 10 is recognized), the decision unit 34 of the display apparatus 30 changes a type of insects to be displayed according to the status parameter, such as the time, the external brightness, or the like when the insect is discovered. Even when the same code image 10 is recognized, the decision unit 34 generates the display object so that a different insect may be discovered according to external temperature of the display apparatus, the external humidity of the display apparatus, the brightness around the display apparatus, the time, or the like, in scanning the code or the like. Hence, even when the insect is discovered at the same position in the attraction space, the display apparatus 30 makes the different insects appear in the morning and night, makes a very rare insect appear at a certain specific time, or makes different insects appear in summer and winter. Thus, the display system 1 can provide the real virtual insect collecting system 70 that the user can enjoy.

Note herein that, when the insect is caught, the display apparatus 30 may set the caught insect as an object of a training game program, set the caught insect as an object of a fighting game for making it fight with an insect that other user has, set the caught insect as an object of a pseudo specimen of insects by registering it into the database on the network, or set the caught insect as an object of an exchange with other user.

Further in collecting the insect, the decision unit 34 of the display apparatus 30 may switch and display a display object for indicating that the insect has been captured, and a display object for indicating that the insect has been escaped, depending on the status parameter. Moreover, the decision unit 34 may change motion of the insect displayed on the display object according to the status parameter. Moreover, when the display object of the insect has been generated based on the code image 10 of the same type in the past, the decision unit 34 may generate the display object of the insect with a growth degree according to the number of detection times of the code image 10. Moreover, when the code image 10 with the same code as the code image 10 acquired in the past is acquired, or when a code image with the same code is acquired at predetermined times, the decision unit 34 may not generate a display object for displaying the same insect as that displayed according to the code image 10 of the code.

Additionally, a function for managing the display object generated by the decision unit 34 is previously provided in the server on the network. The communication unit 46 of the display apparatus 30 transmits to the server at least one information according to the scanned code image 10, and information according to the display object generated by the decision unit 34. The display apparatus 30 receives from the server information on whether or not the display apparatus 30 or other display apparatus has generated a display object of the same insect based on the same code image 10 in the past. When the display apparatus 30 or other display apparatus has generated the display object of the same insect based on the same code image 10 in the past, the decision unit 34 may not generate the display object for displaying the insect according to the code indicated in the code image 10, or may increase probability of not generating the display object for displaying the insect according to the code indicated in the code image 10.

Note herein that, while the virtual insect collecting system 70 has been described as an example of the animate thing collection attraction, the display system I may be applied to the collection attraction of other animate things.

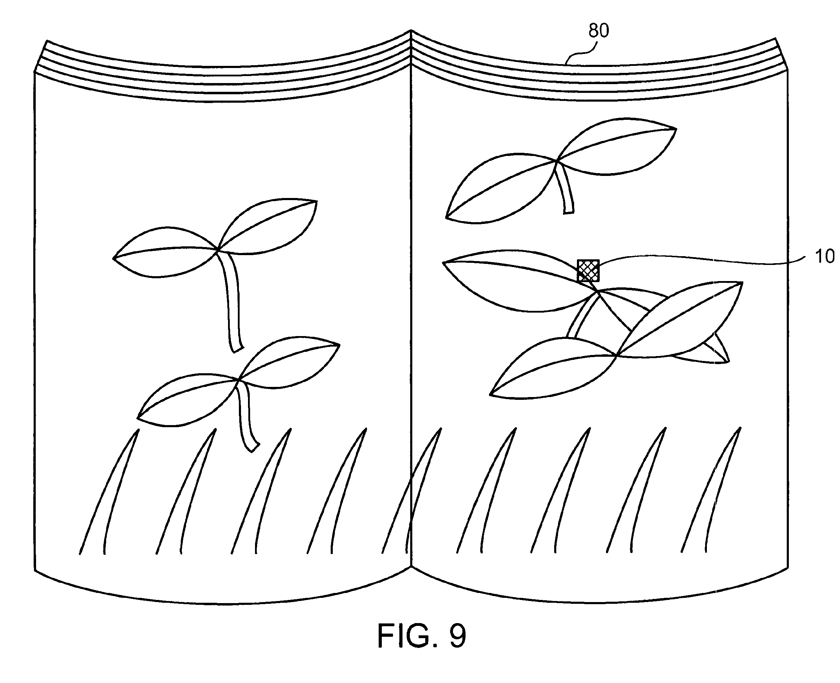

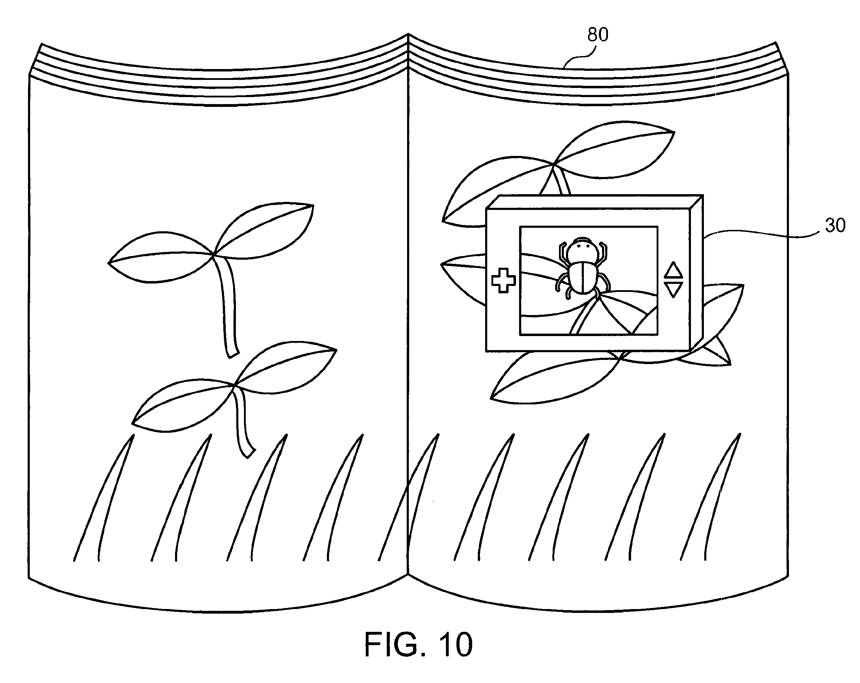

Figs. 9 and 10 show a modification of the virtual insect collecting system 70, using a book 80 as the physical medium 20 on which the code image 10 is attached. Fig. 9 shows a situation before holding up the display apparatus 30 to the book 80, and Fig. 10 shows a situation where the display apparatus 30 is held up to the book 80.

In the example shown in Figs. 9 and 10, a forest or the like is printed on the book 80 with a normal ink, instead of the structure 72 shown in Fig. 8, and the code image 10 is printed with the special ink thereon. This example makes it possible for the user to freely enjoy the pseudo insect collecting at home or the like.

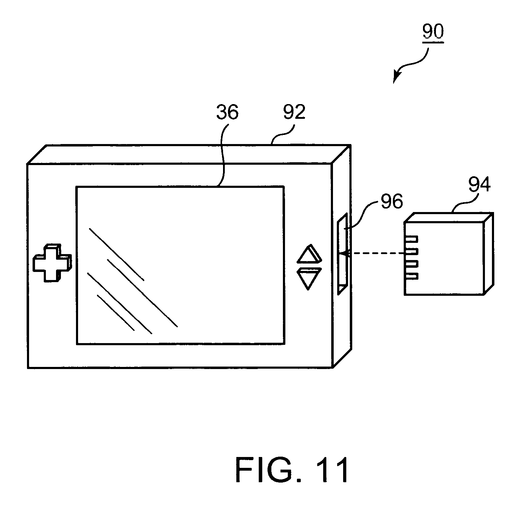

Fig. 11 shows an appearance of a display apparatus 90 as a modification of the display apparatus 30. Members in the display apparatus 90 having the same symbols as those of the display apparatus 30 have almost the same function and configuration as those of the display apparatus 30 in the display apparatus 90, so description thereof will be omitted hereinafter except for a different point.

The display apparatus 90 includes a main body 92, and an external unit 94. The external unit 94 is detachably fitted in a slot 96 formed in the main body 92. The external unit 94 is electrically connected with the main body 92 when the external unit 94 is fitted in the slot 96, and the display apparatus 90 serves as a display apparatus similar to the display apparatus 30.

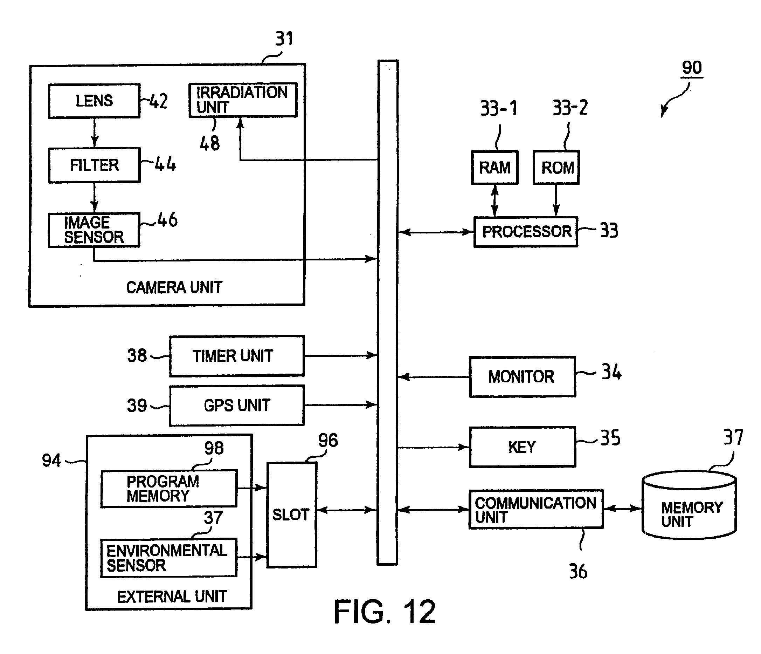

Fig. 12 shows a block diagram of the display apparatus 90.

The display apparatus 90 has the slot 96 to which the external unit 94 including a program memory 98 and the environmental sensor 37 is connected. The program memory 98 stores a program for causing the information processing apparatus to operate as the display apparatus 90. The program stored in the program memory 98 will be scanned by the processor 43 when the main body 92 is attached thereto. The processor 43 executes the program product thus scanned.

The environmental sensor 37 includes sensors, such as the atmospheric temperature sensor or the humidity sensor, for measuring the status parameter, such as atmospheric temperature, humidity, or the like requested by the program stored in the program memory 98. Since in the display apparatus 90, requested sensors are accommodated in the environmental sensor 37 of the external unit 94, it is possible easily, for example, to add a function for acquiring the status parameter, to change the sensor function by upgrading the program, or the like.

Meanwhile, the shooting unit 31 (camera unit 41), the timer unit 38, and the GPS unit 39 may also be incorporated in the external unit 94.

While the embodiments using the code image 10 has been described as an example of the image pattern in accordance with the present invention as above, the image pattern may indirectly include a code using a digital watermark instead of a form in which the code information is directly included. Meanwhile, the display apparatus 30 may take in an image pattern not including the code to thereby perform, according to the status parameter, a processing or a change to the image pattern thus taken. Moreover, while the display apparatus 30 for displaying the image as the embodiment has been described, a sound may be outputted or a character string may be outputted.

Moreover, while the present invention has been described using the embodiments, the technical scope of the present invention is not limited to the scope described in the aforementioned embodiments. It is obvious to those skilled in the art that various modification or improvement may be added to the aforementioned embodiments. It is clear from the description of claims that such aspects to which modification and the improvement are added can also be included in the technical scope of the present invention.

The invention and its various examples can be summarized according to the following clauses:
1. A display apparatus comprising:
   a scanning unit for scanning an image pattern on a physical medium;
   an acquisition unit for acquiring at least one status parameter of an external environment acquired by an environmental sensor;
   a decision unit for determining a display object to be presented to a user based on the image pattern scanned by the scanning unit according to the status parameter acquired by the acquisition unit;
   a shooting unit for shooting the physical medium to generate a captured image, and
   a display unit for displaying the display object determined by the decision unit and the captured image in an overlapping relationship.
2. The display apparatus of clause 1, further comprising a database of one or more display objects,
   wherein the decision unit includes a retrieving unit for retrieving data of the determined display object from the database, and a transmitting unit for transmitting the data of the display object to the display unit.
3. The display apparatus of clause 1, wherein the decision unit includes a generating unit for generating data of the determined display object, and a transmitting unit for transmitting the data of the display object to the display unit.
4. The display apparatus of clause 1, wherein
   the image pattern includes a code indicative of information to be presented to the user, and
   the decision unit interprets the code included in the image pattern scanned by the scanning unit, and determines the display object based on the interpreted result of the code.
5. The display apparatus of clause 1, wherein the scanning unit scans the image pattern that the user cannot visually recognize.
6. The display apparatus of clause 4, further comprising a shooting unit for shooting the physical medium to generate a captured image,
   wherein the display unit displays the captured image and a pointer in an overlapping relationship for pointing a position of the image pattern.
7. The display apparatus of clause 4, further comprising
   a shooting unit for shooting the physical medium to generate a captured image, and a sound outputting unit for outputting a predetermined sound according to the image pattern scanned by the scanning unit on condition that the image pattern is attached onto an object shot by the shooting unit.
8. The display apparatus of clause 1, wherein
   the scanning unit scans an image pattern including a type of a status parameter of an external environment to be acquired by the acquisition unit, and
   the acquisition unit acquires the status parameter of the external environment designated by the type.
9. The display apparatus of clause 1, wherein the acquisition unit acquires the status parameter of the external environment including at least one of a brightness around the display apparatus, a temperature outside the display apparatus, a humidity outside the display apparatus, an acceleration applied to the display apparatus, a sound around the display apparatus, an orientation of the display apparatus, and an atmospheric pressure around the display apparatus.
10. The display apparatus of clause 9, wherein
   the acquisition unit further acquires at least one of a time in scanning the image pattern, a date in scanning the image pattern, a day of the week in scanning the image pattern, and a latitude and a longitude of the display apparatus, and
   the decision unit determines the display object based on the status parameter acquired by the acquisition unit and at least one of the time in scanning the image pattern, the date in scanning the image pattern, the day of the week in scanning the image pattern, and the latitude and the longitude of the display apparatus.
11. The display apparatus of clause 1, wherein
   the scanning unit scans the image pattern including a code identifying a type of animate things, and
   the decision unit determines that the display object about an animate thing selected according to the status parameter of the external environment among the animate things represented by the code included in the image pattern scanned by the scanning unit is presented to the user.
12. The display apparatus of clause 11, wherein the decision unit switches between the display object indicative of capturing of the animate thing and the display object indicative of escaping of the animate thing depending on the status parameter of the external environment.
13. The display apparatus of clause 11, wherein the decision unit changes motion of the display object depending on the status parameter of the external environment.
14. The display apparatus of clause 11, wherein on condition that the display object of the animate thing has been determined based on the same type of the image pattern in the past, the decision unit determines to present the display object about the animate thing of a growth degree according to the number of detection times of the image pattern, to the user.
15. The display apparatus of clause 11, wherein on condition that the scanning unit acquires the image pattern of the same code as the image pattern acquired in the past, the decision unit determines not to present the display object about the same animate thing as the animate thing displayed according to the image pattern of that code, to the user.
16. The display apparatus of clause 11, further comprising a communication unit for communicating with a server operable to manage the display object determined by the decision unit,
   wherein the communication unit transmits at least one of information according to the image pattern scanned by the scanning unit and information according to the display object determined by the decision unit, to the server, and receives information on whether or not the display apparatus or another display apparatus has determined a display object of the same animate thing based on the same image pattern in the past, from the server, and
   wherein on condition that the display apparatus or another display apparatus has determined the display object of the same animate thing based on the same image pattern in the past, the decision unit determines not to present the display object about the display object which displays the animate thing according to the code indicated in the image pattern, to the user, or determines to increase probability of not to present the display object about the animate thing according to the code indicated in the image pattern present to the user.
17. The display apparatus of clause 11, wherein the acquisition unit acquires at least one of the temperature outside the display apparatus, the humidity outside the display apparatus, the brightness around the display apparatus, and the time as the status parameter of the external environment.
18. The display apparatus of clause 1, wherein
   the scanning unit scans the image pattern including the code indicative of an advertisement, and
   the decision unit recognizes the code included in the image pattern scanned by the scanning unit, and determines the display object including an advertisement according to the code thus recognized and the status parameter of the external environment is shown.
19. An output device comprising:
   a scanning unit for scanning information;
   an acquisition unit for acquiring at least one status parameter indicative of a status of an external environment;
   a generating unit for generating a display object according to the information scanned by the scanning unit and the status parameter acquired by the acquisition unit;
   a shooting unit for shooting the object to be shot to generate a captured image; and
   an output unit for outputting, to a user, the display object generated by the generating unit and the captured image in an overlapping relationship.
20. A display system, comprising:
   a structure to which an image pattern is attached; and
   a display apparatus including a scanning unit for scanning the image pattern on the structure, an acquisition unit for acquiring a status parameter of an external environment acquired by an environmental sensor, a decision unit for determining a display object to be presented to a user based on the image pattern scanned by the scanning unit according to the status parameter acquired by the acquisition unit, a shooting unit for shooting the physical medium to generate a captured image, and a display apparatus for displaying the display object determined by the decision unit and the captured image in an overlapping relationship.
21. A display method, comprising the steps of:
   scanning an image pattern on a physical medium;
   acquiring at least one status parameter of an external environment acquired by an environmental sensor;
   determining a display object to be presented to a user based on the scanned image pattern according to the acquired status parameter;
   shooting the physical medium to generate a captured image;
      and,
   displaying the display object thus determined and the captured image in an overlapping relationship.
22. A medium with an image pattern including a code indicative of information to be presented to a user attached thereto,
   wherein the code includes information for designating a type of a status parameter of an external environment to be acquired by an apparatus operable to present the information indicated by the code to the user, and
   wherein the medium permits the apparatus, which has scanned the image pattern, to acquire the type of the status parameter of the external environment and to display the display object according to the status parameter and a captured image that is shot by a shooting unit of the apparatus in an overlapping relationship.
23. A program product for causing an information processing apparatus to operate as a display apparatus, the program product causing the information processing apparatus to operate as:
   a scanning unit for scanning an image pattern on a physical medium;
   an acquisition unit for acquiring at least one status parameter of an external environment acquired by an environmental sensor;
   a decision unit for determining a display object to be presented to a user based on the image pattern scanned by the scanning unit according to the status parameter acquired by the acquisition unit;
   a shooting unit for shooting the physical medium to generate a captured image; and
   a display unit for displaying the display object determined by the decision unit and the captured image in an overlapping relationship.
24. An external unit to be attached to an information processing apparatus, comprising:
   an acquisition unit for acquiring at least one status parameter of an external environment acquired by an environmental sensor; and
   a program memory operable to store a program for causing the information processing apparatus to operate as a display apparatus,
   wherein the program memory stores the program for causing the information processing apparatus, to which the external unit is being attached, to operate as a scanning unit for scanning an image pattern on a physical medium, an acquisition unit for acquiring at least one status parameter of an external environment acquired by an environmental sensor, a decision unit for determining a display object to be presented to a user based on the image pattern scanned by the scanning unit according to the status parameter acquired by the acquisition unit, a shooting unit for shooting the physical medium to generate a captured image, and a display unit for displaying the display object determined by the decision unit and the captured image in an overlapping relationship.

## Claims

1. A display apparatus comprising:
a scanning unit (32) for scanning an image pattern on a physical medium;
an acquisition unit (33) for acquiring at least one status parameter of an external environment acquired by an environmental sensor;
a decision unit (34) for determining a display object to be presented to a user based on the image pattern scanned by the scanning unit according to the status parameter acquired by the acquisition unit;
a shooting unit (31) for shooting the physical medium to generate a captured image, and
a display unit (36) for displaying the display object determined by the decision unit and the captured image in an overlapping relationship.

2. The display apparatus as claimed in claim 1, further comprising a database of one or more display objects, wherein the decision unit includes a retrieving unit for retrieving data of the determined display object from the database, and a transmitting unit for transmitting the data of the display object to the display unit (36).

3. The display apparatus as claimed in claim 1, wherein the image pattern includes a code indicative of information to be presented to the user, and the decision unit (34) interprets the code included in the image pattern scanned by the scanning unit, and determines the display object based on the interpreted result of the code.

4. The display apparatus as claimed in claim 3, further comprising a sound outputting unit for outputting a predetermined sound according to the image pattern scanned by the scanning unit (32) on condition that the image pattern is attached onto an object shot by the shooting unit.

5. The display apparatus as claimed in claim 1, wherein the scanning unit scans an image pattern including a type of a status parameter of an external environment to be acquired by the acquisition unit, and the acquisition unit (33) acquires the status parameter of the external environment designated by the type.

6. The display apparatus of claim 1, wherein the acquisition unit acquires the status parameter of the external environment including at least one of a brightness around the display apparatus, a temperature outside the display apparatus, a humidity outside the display apparatus, an acceleration applied to the display apparatus, a sound around the display apparatus, an orientation of the display apparatus, and an atmospheric pressure around the display apparatus.

7. The display apparatus of claim 6, wherein the acquisition unit (33) further acquires at least one of a time in scanning the image pattern, a date in scanning the image pattern, a day of the week in scanning the image pattern, and a latitude and a longitude of the display apparatus, and the decision unit determines the display object based on the status parameter acquired by the acquisition unit and at least one of the time in scanning the image pattern, the date in scanning the image pattern, the day of the week in scanning the image pattern, and the latitude and the longitude of the display apparatus.

8. The display apparatus as claimed in claim 1, wherein the scanning unit (32) scans the image pattern including a code identifying a type of animate things, and the decision unit (34) determines that the display object about an animate thing selected according to the status parameter of the external environment among the animate things represented by the code included in the image pattern scanned by the scanning unit is presented to the user.

9. The display apparatus as claimed in claim 8, wherein the decision unit switches between the display object indicative of capturing of the animate thing and display object indicative of escaping of the animate thing depending on the status parameter of the external environment.

10. The display apparatus as claimed in claim 8, wherein on condition that the display object of the animate thing has been determined based on the same type of the image pattern in the past, the decision unit determines to present the display object about the animate thing of a growth degree according to the number of detection times of the image pattern, to the user.

11. The display apparatus as claimed in claim 8, wherein on condition that the scanning unit (32) acquires the image pattern of the same code as the image pattern acquired in the past, the decision unit determines not to present the display object about the same animate thing as the animate thing displayed according to the image pattern of that code, to the user.

12. The display apparatus as claimed in claim 8, further comprising a communication unit for communicating with a server operable to manage the display object determined by the decision unit, wherein the communication unit transmits at least one of information according to the image pattern scanned by the scanning unit and information according to the display object determined by the decision unit, to the server, and receives information on whether or not the display apparatus or another display apparatus has determined a display object of the same animate thing based on the same image pattern in the past, from the server, and wherein on condition that the display apparatus or another display apparatus has determined the display object of the same animate thing based on the same image pattern in the past, the decision unit determines not to present the display object about the display object which displays the animate thing according to the code indicated in the image pattern, to the user, or determines to increase probability of not to present the display object about the animate thing according to the code indicated in the image pattern present to the user.

13. The display apparatus as claimed in claim 1, wherein the scanning unit scans the image pattern including the code indicative of an advertisement, and the decision unit recognizes the code included in the image pattern scanned by the scanning unit, and determines the display object including an advertisement according to the code thus recognized and the status parameter of the external environment is shown.

14. A display method, comprising the steps of:
scanning an image pattern on a physical medium (S10);
acquiring at least one status parameter of an external environment acquired by an environmental sensor (S14);
determining a display object to be presented to a user based on the scanned image pattern according to the acquired status parameter;
shooting the physical medium to generate a captured image; and,
displaying the display object thus determined and the captured image in an overlapping relationship.

15. A program product for causing an information processing apparatus to operate as a display apparatus, the program product causing the information processing apparatus to operate as:
a scanning unit (32) for scanning an image pattern on a physical medium;
an acquisition unit (33) for acquiring at least one status parameter of an external environment acquired by an environmental sensor;
a decision unit (34) for determining a display object to be presented to a user based on the image pattern scanned by the scanning unit according to the status parameter acquired by the acquisition unit;
a shooting unit (31) for shooting the physical medium to generate a captured image; and
a display unit (30) for displaying the display object determined by the decision unit and the captured image in an overlapping relationship.

## Patentansprüche

1. Anzeigevorrichtung, die das Folgende umfasst:
eine Abtasteinheit (32) zum Abtasten eines Bildmusters auf einem physischen Medium;
eine Erfassungseinheit (33) zum Erfassen wenigstens eines Zustandsparameters einer externen Umgebung, erfasst durch einen Umgebungssensor;
eine Entscheidungseinheit (34) zum Festlegen eines Anzeigeobjekts, das einem Nutzer angezeigt werden soll, wobei das Darstellen auf dem von der Abtasteinheit abgetasteten Bildmuster gemäß dem von der Erfassungseinheit aufgenommenen Zustandsparameter beruht;
eine Fotografiereinheit (31) zum Fotografieren des physischen Mediums, um ein erfasstes Bild zu erzeugen, und
eine Anzeigeeinheit (36) zum Anzeigen des durch die Entscheidungseinheit festgelegten Anzeigeobjekts und des erfassten Bildes, wobei das Objekt und das Bild überlappend dargestellt werden.

2. Anzeigeeinrichtung nach Anspruch 1, die ferner eine Datenbank eines oder mehrerer Anzeigeobjekte umfasst, wobei die Entscheidungseinheit eine Abrufeinheit zum Abrufen von Daten des festgelegten Anzeigeobjekts aus der Datenbank und eine Übertragungseinheit zum Übertragen der Daten des Anzeigeobjekts an die Anzeigeeinheit (36) beinhaltet.

3. Anzeigevorrichtung nach Anspruch 1, wobei das Bildmuster einen Code beinhaltet, der die dem Nutzer darzustellenden Informationen angibt, und die Entscheidungseinheit (34) den Code übersetzt, der in dem von der Abtasteinheit abgetasteten Bildmuster enthalten ist, und das Anzeigeobjekt auf der Grundlage des übersetzten Ergebnisses des Codes festlegt.

4. Anzeigeeinrichtung nach Anspruch 3, die ferner eine Audio-Ausgabeeinheit zum Ausgeben eines vorgegebenen Tonsignals entsprechend dem von der Abtasteinheit (32) abgetasteten Bildmusters ausgibt, wenn das Bildmuster auf einem Objekt angebracht ist, das von der Fotografiereinheit fotografiert wurde.

5. Anzeigeeinrichtung nach Anspruch 1, wobei die Abtasteinheit ein Bildmuster abtastet, das einen Typ eines Zustandsparameters einer externen Umgebung enthält, der mit der Erfassungseinheit erfasst werden soll, und die Erfassungseinheit (33) den Zustandsparameter der externen Umgebung erfasst, der durch den Typ angegeben wird.

6. Anzeigevorrichtung nach Anspruch 1, wobei die Erfassungseinheit den Zustandsparameter der externen Umgebung erfasst, zu dem mindestens einer der folgenden gehört: eine Helligkeit um die Anzeigeeinrichtung herum, eine Temperatur außerhalb der Anzeigeeinrichtung, eine Feuchtigkeit außerhalb der Anzeigeeinrichtung, eine auf die Anzeigeeinheit ausgeübte Beschleunigung, ein Tonsignal um die Anzeigeeinrichtung herum, eine Ausrichtung der Anzeigeeinrichtung oder ein Luftdruck um die Anzeigevorrichtung herum.

7. Anzeigeeinrichtung nach Anspruch 6, wobei die Erfassungseinheit (33) ferner wenigstens eines der folgenden Merkmale erfasst: eine Abtastzeit des Bildmusters, ein Abtastdatum des Bildmusters, einen Wochentag des Abtastens des Bildmusters und eine geografische Breite und Höhe der Anzeigevorrichtung, und wobei die Entscheidungseinheit das Anzeigeobjekt auf der Grundlage des von der Erfassungseinheit erhaltenen Zustandsparameters wenigstens eines der folgenden Merkmale ermittelt: die Abtastzeit des Bildmusters, das Abtastdatum des Bildmusters und der Wochentag des Abtastens des Bildmusters oder der geografischen Breite und Länge der Anzeigevorrichtung.

8. Anzeigevorrichtung nach Anspruch 1, wobei die Abtasteinheit (32) das Bildmuster einschließlich einem Code abtastet, der einen Typ von Lebewesen kennzeichnet, und die Entscheidungseinheit (34) festlegt, dass das Anzeigeobjekt zu einem Lebewesen, gemäß dem Zustandsparameter der externen Umgebung ausgewählt unter den Lebewesen, die durch den in dem abgetasteten Bildmuster enthaltenen Code dargestellt werden, dem Nutzer dargestellt wird.

9. Anzeigevorrichtung nach Anspruch 8, wobei die Entscheidungseinheit zwischen dem Anzeigeobjekt, das das Einfangen des Lebewesens anzeigt, und dem Anzeigeobjekt, das das Entkommen des Lebewesens anzeigt, abhängig vom Zustandsparameter der externen Umgebung wechselt.

10. Anzeigevorrichtung nach Anspruch 8, wobei, wenn das Anzeigeobjekt des Lebewesens auf der Grundlage desselben Typs des Bildmusters in der Vergangenheit schon einmal ermittelt wurde, die Entscheidungseinheit festlegt, das Anzeigeobjekt des Lebewesens mit einem Wachstumsgrad gemäß der Anzahl von Erkennungsvorgängen des Bildmusters dem Nutzer darzustellen.

11. Anzeigevorrichtung nach Anspruch 8, wobei, wenn die Abtasteinheit (32) das Bildmuster übereinstimmend mit dem Code eines früher erfassten Bildmusters aufnimmt, die Entscheidungseinheit festlegt, das Anzeigeobjekt zu dem Lebewesen, das mit dem gemäß dem Bildmuster dieses Codes angezeigten Lebewesen übereinstimmt, dem Nutzer nicht darzustellen.

12. Anzeigevorrichtung nach Anspruch 8, die ferner eine Datenübertragungseinheit zum Austausch von Daten mit einem Server umfasst, der zum Verwalten des von der Entscheidungseinheit festgelegten Anzeigeobjekts geeignet ist, wobei die Datenübertragungseinheit wenigstens Daten gemäß dem von der Abtasteinheit abgetasteten Bildmuster oder Daten gemäß dem von der Entscheidungseinheit festgelegten Anzeigeobjekt an den Server überträgt und Daten von dem Server im Hinblick darauf empfängt, ob die Anzeigeeinrichtung oder eine weitere Anzeigevorrichtung ein Anzeigeobjekt desselben Lebewesens auf der Grundlage desselben Bildmusters in der Vergangenheit schon einmal festgelegt hat, und wobei, wenn die Anzeigevorrichtung oder eine weitere Anzeigevorrichtung das Anzeigeobjekt desselben Lebewesens auf der Grundlage desselben Bildmusters in der Vergangenheit schon einmal festgelegt hat, die Entscheidungseinheit festlegt, das Anzeigeobjekt um das Anzeigeobjekt, welches das Lebewesen gemäß dem auf dem Bildmuster angegebenen Code anzeigt, dem Nutzer nicht darzustellen, oder die Wahrscheinlichkeit zu erhöhen, das Anzeigeobjekt um das Lebewesen gemäß dem in dem Bildmuster angezeigten Code nicht darzustellen.

13. Anzeigevorrichtung nach Anspruch 1, wobei die Abtasteinheit das Bildmuster einschließlich dem Code abtastet, der eine Werbung kennzeichnet, und die Entscheidungseinheit den in dem von der Abtasteinheit abgetasteten Bildmuster enthaltenen Code erkennt und das Anzeigeobjekt einschließlich einer Werbung gemäß dem so erkannten Code festlegt und der Zustandsparameter der externen Umgebung angezeigt wird.

14. Anzeigeverfahren, das die folgenden Schritte umfasst:
Abtasten eines Bildmusters auf einem physischen Medium (S10);
Erfassen wenigstens eines Zustandsparameters einer externen Umgebung, die durch einen Umgebungssensor (S14) erfasst wird;
Ermitteln eines Anzeigeobjekts, das einem Nutzer auf der Grundlage des abgetasteten Bildmusters gemäß dem erhaltenen Zustandsparameter dargestellt wird;
Fotografieren des physischen Mediums zum Erzeugen eines erfassten Bildes; und
Anzeigen des auf diese Weise ermittelten Anzeigeobjekts und des erfassten Bildes, wobei das Objekt und das Bild überlappend dargestellt werden

15. Programmprodukt, mit dem eine Datenverarbeitungsvorrichtung veranlasst werden kann, als Anzeigevorrichtung zu arbeiten, wobei das Programmprodukt die Datenverarbeitungsvorrichtung veranlasst, als Folgendes betrieben zu werden:
als Abtasteinheit (32) zum Abtasten eines Bildmusters auf einem physischen Medium;
als Erfassungseinheit (33) zum Erfassen wenigstens eines Zustandsparameters einer externen Umgebung, der durch einen Umgebungssensor erhalten wird;
als Entscheidungseinheit (34) zum Festlegen eines Anzeigeobjekts, das für einen Nutzer auf der Grundlage des von der Abtasteinheit abgetasteten Bildmusters gemäß dem von der Erfassungseinheit erhaltenen Zustandsparameter dargestellt werden soll;
eine Fotografiereinheit (31) zum Fotografieren des physischen Mediums, um ein erfasstes Bild zu erzeugen; und
eine Anzeigeeinheit (30) zum Anzeigen des Anzeigeobjekts, das durch die Entscheidungseinheit festgelegt wird, und
des erfassten Bildes, wobei das Objekt und das Bild sich überlappend dargestellt werden.

## Revendications

1. Dispositif d'affichage, comprenant :
une unité de balayage exploratoire (32), pour effectuer un balayage exploratoire d'un motif d'image sur un support physique ;
une unité d'acquisition (33), pour acquérir au moins un paramètre d'état d'un environnement externe acquis par un capteur environnemental ;
une unité de décision (34), pour déterminer un objet d'affichage à présenter à un utilisateur, d'après le motif d'image soumis à balayage exploratoire par l'unité de balayage exploratoire, selon le paramètre d'état acquis par l'unité d'acquisition ;
une unité de prise de vue (31), pour impressionner le support physique pour générer une image capturée, et
une unité d'affichage (36), pour afficher l'objet d'affichage déterminé par l'unité de décision et l'image capturée en une relation de chevauchement.

2. Dispositif d'affichage selon la revendication 1, comprenant en outre une base de données d'un ou plusieurs objets d'affichage, dans lequel l'unité de décision comprend une unité de récupération, pour récupérer des données de l'objet d'affichage déterminé, à partir de la base de donnés, et une unité de transmission, pour transmettre les données de l'objet d'affichage à l'unité d'affichage (36).

3. Dispositif d'affichage selon la revendication 1, dans lequel le motif d'image comprend un code, indicatif de l'information à présenter à l'utilisateur, et l'unité de décision (34) interprète le code inclus dans le motif d'image soumis au balayage exploratoire par l'unité de balayage exploratoire, et détermine l'objet d'affichage d'après le résultat interprété du code.

4. Dispositif d'affichage selon la revendication 3, comprenant en outre une unité de génération de sons, pour produire en sortie un son prédéterminé selon le motif d'image soumis à un balayage exploratoire par l'unité de balayage exploratoire (32), à la condition que le motif d'image soit attaché sur un objet dont l'unité de prise de vue a pris un cliché.

5. Dispositif d'affichage selon la revendication 1, dans lequel l'unité de balayage exploratoire scrute un motif d'image incluant un type de paramètre d'état d'un environnement externe devant être acquis par l'unité d'acquisition, et l'unité d'acquisition (33) acquiert le paramètre d'état de l'environnement externe désigné par le type.

6. Dispositif d'affichage selon la revendication 1, dans lequel l'unité d'acquisition acquiert le paramètre d'état de l'environnement externe incluant au moins l'une d'une brillance autour du dispositif d'affichage, d'une température à l'extérieur du dispositif d'affichage, d'une humidité à l'extérieur du dispositif d'affichage, d'une orientation du dispositif d'affichage, et d'une pression atmosphérique autour du dispositif d'affichage.

7. Dispositif d'affichage selon la revendication 6, dans lequel l'unité d'acquisition (33) acquiert en outre au moins l'un d'un temps dans le balayage exploratoire du motif d'image, d'une date dans le balayage exploratoire du motif d'image, d'un jour de la semaine dans le balayage exploratoire du motif d'image, et d'une latitude et d'une longitude du dispositif d'affichage, et l'unité de décision détermine l'objet d'affichage d'après le paramètre d'état acquis par l'unité d'acquisition et au moins l'un du temps dans le balayage exploratoire du motif d'image, de la date dans le balayage exploratoire du motif d'image, du jour de la semaine dans le balayage exploratoire du motif d'image, et de la latitude et de la longitude du dispositif d'affichage.

8. Dispositif d'affichage selon la revendication 1, dans lequel l'unité de balayage exploratoire (32) effectue un balayage exploratoire du motif d'image incluant un code identifiant un type de choses animées, et l'unité de décision (34) détermine que l'objet d'affichage, pouvant être une chose animée, selon le paramètre d'état de l'environnement externe parmi les choses animées représentées par le code inclus dans le motif d'image soumis à balayage exploratoire par l'unité de balayage exploratoire, est présenté à l'utilisateur.

9. Dispositif d'affichage selon la revendication 8, dans lequel l'unité de décision commute entre l'objet d'affichage, indicatif de la capture de la chose animée, et l'objet d'affichage, indicatif de l'échappement de la chose animée, selon le paramètre d'état de l'environnement externe.

10. Dispositif d'affichage selon la revendication 8, dans lequel, à la condition que l'objet d'affichage de la chose animée ait été déterminé d'après le même type de motif d'image dans le passé, l'unité de décision détermine présenter l'objet d'affichage, au sujet de la chose animée d'un degré de croissance selon le nombre de temps de détection du motif d'image, à l'utilisateur.

11. Dispositif d'affichage selon la revendication 8, dans lequel, à la condition que l'unité de balayage exploratoire (32) acquiert le motif d'image du même code que le motif d'image acquis dans le passé, l'unité de décision détermine de ne pas présenter à l'utilisateur l'objet d'affichage, au sujet de la même chose animée, que la chose animée affichée selon le motif d'image de ce code.

12. Dispositif d'affichage selon la revendication 8, comprenant en outre une unité de communication, pour communiquer avec un serveur pouvant fonctionner pour gérer l'objet d'affichage déterminé par l'unité de décision, dans lequel l'unité de communication transmet au serveur au moins l'une, d'une information selon le motif d'image soumis à balayage exploratoire par l'unité de balayage exploratoire, et d'une information selon l'objet d'affichage déterminé par l'unité de décision, et reçoit du serveur une information sur le fait de savoir si ou non le dispositif d'affichage, ou un autre dispositif d'affichage, a déterminé un objet d'affichage de la même chose animée, d'après le même motif d'image dans le passé, et dans lequel, à la condition que le dispositif d'affichage, ou un autre dispositif d'affichage, a déterminé l'objet d'affichage de la même chose animée d'après le même motif d'image dans le passé, l'unité de décision détermine de ne pas présenter à l'utilisateur l'objet d'affichage, au sujet de l'objet d'affichage qui affiche la chose animée selon le code indiqué dans le motif d'image, ou détermine d'augmenter la probabilité de ne pas présenter à l'utilisateur l'objet d'affichage, au sujet de la chose animée selon le code indiqué dans le motif d'image présent.

13. Dispositif d'affichage selon la revendication 1, dans lequel l'unité de balayage exploratoire soumet à un balayage exploratoire le motif d'image incluant le code indicatif d'une annonce publicitaire, et l'unité de décision reconnaît le code inclus dans le motif d'image soumis à un balayage exploratoire par l'unité de balayage exploratoire, et détermine que l'objet d'affichage, incluant une annonce publicitaire selon le code ainsi reconnu et le paramètre d'état de l'environnement externe, est représenté.

14. Procédé d'affichage, comprenant les étapes consistant à :
effectuer un balayage exploratoire d'un motif d'image sur un support physique (S10);
acquérir au moins un paramètre d'état d'un environnement externe acquis par un capteur environnemental (S14) ;
déterminer un objet d'affichage à présenter à un utilisateur, d'après le motif d'image soumis à balayage exploratoire, selon le paramètre d'état acquis ;
impressionner le support physique pour générer une image capturée, et
afficher l'objet d'affichage ainsi déterminé par l'unité de décision et l'image capturée en une relation de chevauchement.

15. Produit-programme, pour qu'un dispositif de traitement d'information fonctionne en tant que dispositif d'affichage, le produit-programme faisant que le dispositif de traitement d'information fonctionne en tant que :
une unité de balayage exploratoire (32), pour effectuer un balayage exploratoire d'un motif d'image sur un support physique ;
une unité d'acquisition (33), pour acquérir au moins un paramètre d'état d'un environnement externe acquis par un capteur environnemental ;
une unité de décision (34), pour déterminer un objet d'affichage à présenter à un utilisateur, d'après le motif d'image soumis à balayage exploratoire par l'unité de balayage exploratoire, selon le paramètre d'état acquis par l'unité d'acquisition ;
une unité de prise de vue (31), pour impressionner le support physique pour générer une image capturée, et
une unité d'affichage (30), pour afficher l'objet d'affichage déterminé par l'unité de décision et l'image capturée en une relation de chevauchement.
